Europäisches Patentamt

European Patent Office

Office européen des brevets

(19)

(11) EP 1 536 354 A1

## (12) EUROPEAN PATENT APPLICATION
published in accordance with Art. 158(3) EPC

(43) Date of publication:
01.06.2005 Bulletin 2005/22

(21) Application number: 03736258.9

(22) Date of filing: 26.06.2003

(51) Int Cl.$^7$: **G06F 17/60**

(86) International application number:
**PCT/JP2003/008114**

(87) International publication number:
**WO 2004/010357 (29.01.2004 Gazette 2004/05)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.07.2002 JP 2002211385**

(71) Applicant: **Japan Industrial Technology Association**
**Minato-ku, Tokyo 105-0001 (JP)**

(72) Inventors:
• **ISHIMARU, Kimio, Japan Ind. Tech. Association**
**Tokyo 105-0001 (JP)**

• **KANAMORI, Takashi,**
**Japan Ind. Tech. Association**
**Tokyo 105-0001 (JP)**
• **MIYABE, Nobuo, Japan Ind. Tech. Association**
**Tokyo 105-0001 (JP)**

(74) Representative: **Vinsome, Rex Martin**
**Urquhart-Dykes & Lord LLP**
**St Nicholas Chambers,**
**Amen Corner**
**Newcastle-Upon-Tyne NE1 1PE (GB)**

(54) **RESEARCH/DEVELOPMENT TECHNOLOGY TRANSFER METHOD, PROGRAM, AND RECORDING MEDIUM**

(57) Matching between seeds of technology studied/developed and needs required by an enterprise is found and the technology as the study result is transferred. A processing unit discloses technology seeds information including a study/development plan, study result, expected result, study cost, balance, and the like via a communication network (S101). Upon reception of a contract application from a development institution, the processing unit inputs contract application information (S103, S105). The processing unit identifies the application type: an information disclosure contract which discloses detailed study result information to an enterprise, or an option contract which gives an optional right enabling an enterprise to carry out the study result with a predetermined time limit before the contract, or a development contract which gives right to develop the technology obtained by the study result, and performs a contract processing corresponding to the application type (S107 to S113). Moreover, the processing unit performs calculation for dividing the consideration obtained by the technology transfer to a study institution and a study/development fixing institution (S117) and stores it in a storage unit (S119).

FIG. 7

EP 1 536 354 A1

## Description

Technical Field

The present invention relates to research-and-development technology transfer methods, research-and-development technology transfer systems, research-and-development technology transfer programs, and recording media having stored thereon the programs.

Background Art

Generally, a risk accompanies research and development, and a great amount of expenditure is required for creating a landmark product. Therefore, it may be difficult in some cases for a company itself to perform research and development with a long-term target. There have been cases, for example, in which a public organization develops a basic technology and a private company reduces it to practice. If a private company reduces a result of a research organization into practice with the use of funds of private investors, it is expected that a new industry is formed.

To increase the rate of success in research and development, it is necessary that the final target be definite and a series of research and development be combined. Research and development should be performed with these relationships being made definite. To this end, it is urgently demanded that needs and seeds be found, matching be found between them, and research-and-development funds be obtained.

New businesses which include selling goods and financial transactions by the use of personal computers and networks have been emerging due to the progress of communication networks such as the Internet. Under such a background, a fund information processing apparatus has been proposed (in Japanese Unexamined Patent Application Publication No. 2002-24528) which processes information related to intellectual-property funds with which investment is made in intellectual-property rights such as patent rights to provide investors with more investment chances and to promote effective use of the intellectual-property rights.

Disclosure of Invention

When a result of research and development is technology-transferred to a reduction-to-practice organization such as a private company, an issue is whether the seeds of the technology researched or developed matches the needs of the private company. Research organizations need to collect money equal to the research expenses used for research and development. How to technology-transfer research results and how to reduce the results into practice are their issues. Reduction-to-practice organizations need to obtain technical-seeds information as quick as possible and to determine whether effective technical seeds can be reduced into business and how much profit is obtained when the seeds are reduced into business.

The present invention has been made in view of the above-described points, and an object thereof is to provide a research-and-development technology transfer method, a research-and-development technology transfer system, a research-and-development technology transfer program, and a recording medium having stored thereon the program, all for implementing processes and procedures in a research-and-development intermediary organization which organically connects research-and-development organizations and reduction-to-practice organizations. Another object of the present invention is to disclose technical seeds, which are the results of research, to find matching between the seeds and needs and to perform technology transfer to reduce the results of research into practice. Still another object of the present invention is to obtain consideration by the technology transfer of the results of research, so that research organizations can attempt to collect money equal to research expenses.

According to solving means of the present invention, a research-and-development technology transfer method including:

a step in which a processing section reads technical-seeds information corresponding to each research-theme identification information from a storage section having stored for each research-theme identification information, technical-seeds information which includes patent information or academic-society-presentation information, and expense information and income-estimate information both related to the research theme, and discloses the technical-seeds information through a communication network;

a step in which the processing section receives, from a company computer, contract-application information which includes company identification information, research-theme identification information, and application-type information indicating either an information-disclosure contract or a license agreement;

a step in which the processing section executes information-disclosure-contract processing, when the processing section determines that the received application-type information indicates an information-disclosure contract, where the processing section sets an information-disclosure charge LA, sends the information-disclosure charge LA and contract data stored in the storage section for each research-theme identification information, to the company computer, stores research-theme identification information and contract information correspondingly to the company identification information of a company which sends contract-terms-and-conditions consent data in the storage section, reads detailed information-disclosure information stored correspondingly to the research-theme identification information from the storage section and discloses the detailed information-disclosure information to the company computer, and/or provides a material such as a sample and a strain;

a step in which the processing section executes license agreement processing, when the processing section determines that the received application-type information indicates a license agreement, where the processing section sets a license fee LC, sends the license fee LC and contract data stored in the storage section for each research-theme identification information, to the company computer, stores research-theme identification information and contract information correspondingly to the company identification information of a company which sends contract-terms-and-conditions consent data in the storage section, and reports to the company computer that a license has been given;

a step in which the processing section performs distribution processing where the processing section obtains a dividend Dt to a research-and-development intermediary organization and a dividend Dr to a research organization on the basis of consideration income obtained by technology transfer, which includes the information-disclosure charge LA and/or the license fee LC, for the research-theme identification information; and

a step in which the processing section stores the dividend Dt to the research-and-development intermediary organization and the dividend Dr to the research organization in the storage section correspondingly to the research-theme identification information,

and a research-and-development technology transfer program which makes a computer execute each of the above-described steps, and a computer-readable recording medium having stored thereon the program are provided.

Brief Description of the Drawings

Fig. 1 is a hardware structural view of a research-and-development technology transfer system.

Fig. 2 shows the formats of a research-plan data base, a research-result data base, and an expected-result data base.

Fig. 3 is a view showing the format of research-money-balance information stored in a research-money-balance data base.

Fig. 4 is a view showing the format of contractor company information stored in a contractor-company data base.

Fig. 5 is a view showing the format of technical-seeds information stored in a technical-seeds data base.

Fig. 6 is a view showing the format of contract information stored in a contract data base.

Fig. 7 is a flowchart of processing for research-and-development technology transfer.

Fig. 8 is a flowchart of processing for an information-disclosure contract.

Fig. 9 is a flowchart of processing for an optional contract.

Fig. 10 is a flowchart of processing for a license agreement.

Best Mode for Carrying Out the Invention

In an embodiment of the present invention, a research-and-development technology transfer method and a research-and-development technology transfer system both for implementing processes and procedures in a research-and-development intermediary organization which connects research organizations and reduction-to-practice organizations will be described. One of the roles of the research-and-development intermediary organization is to collect technical seeds which the research organizations have and to perform technology transfer to the reduction-to-practice organizations. In the present embodiment, the research-and-development intermediary system performs processes and procedures, such as technical-seeds disclosure, making contracts with the reduction-to-practice organizations which include private companies, and the distribution of consideration. In the present embodiment, technology-transfer contracts with the reduction-to-practice organizations include an information-disclosure contract for providing detailed technical-seeds information; an optional contract for providing a reduction-to-practice organization with a research result for a limited period before a license agreement is made, so that the company can examine the possibility of reducing the result into business for that experiment and trial period; and a license agreement for giving a right of reducing a research result into practice to a reduction-to-practice organization. The embodiment will be described below by referring to the drawings.

(System configuration)

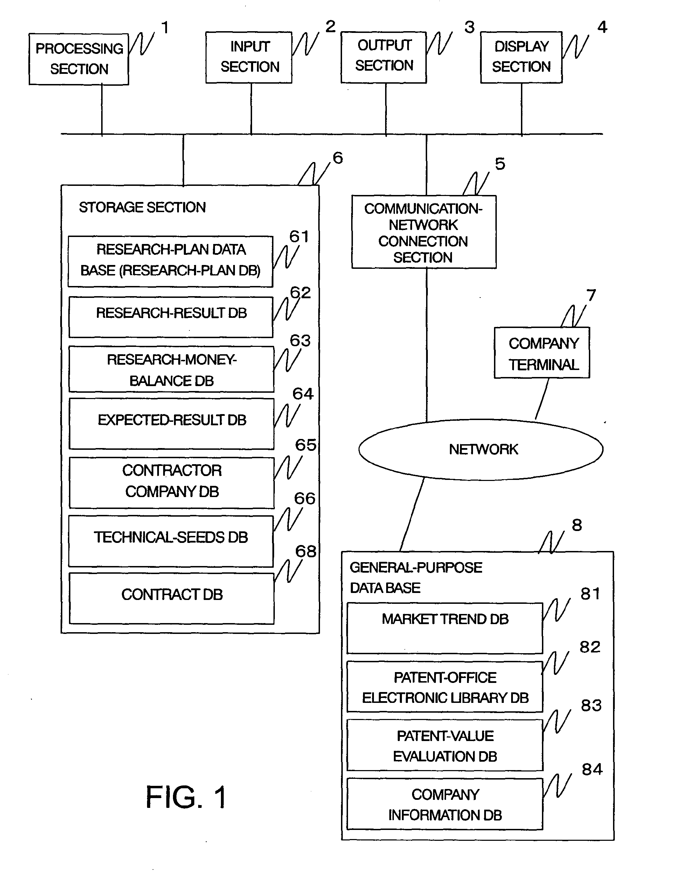

Fig. 1 is a view showing the hardware configuration of a research-and-development investment securities selling system.

The system is provided with a processing section (CPU) 1, an input section 2, an output section 3, a display section 4, a communication-network connection section 5, and a storage section 6. The communication-network connection section 5 is used to connect to a communication network such as the Internet. A communication network to be connected may be any network other than the Internet. The storage section 6 includes a research-plan data base (research-plan DB) 61, a research-result DB 62, a research money balance DB 63, an expected result DB 64, a contractor company DB 65, a technical-seeds DB 66, contract DB 68. In addition, the system is provided with an investor terminal 7 and a general-purpose data base 8 both connected to a network to which the communication-network connection section 5 is connected. The general-purpose data base 8 includes a market trend DB 81, a Patent-Office Electronic Library DB 82, a patent-value evaluation DB 83, and a company information DB 84. In the system, the general-purpose data base 8 can be referred to, or can be downloaded to the storage section 6.

(File structures of data bases)

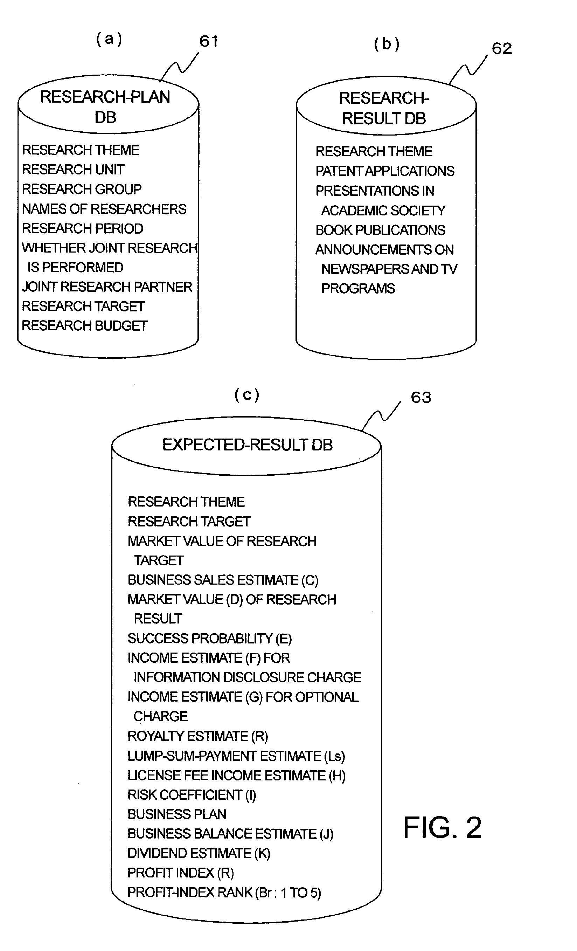

Fig. 2 shows the formats of a research-plan data base, a research-result data base, and an expected-result data base. Each item in these data bases is determined in advance or obtained by calculation.

<Research-plan DB>

Fig. 2(a) is a view showing the format of research-plan information stored in the research-plan DB 61.

The research-plan DB 61 stores information related to each research plan, such as a research target, a research budget, and a researcher organization, in association with the corresponding research theme. The stored information includes, for example, the research theme, a research unit, a research group, the names of researchers, a research period, whether joint research is performed, a joint research partner, the research target, the research budget, and detailed information-disclosure information. The research budged may be stored as items such as labor cost, a research expense, and a facility expense.

<Research-result DB>

Fig. 2(b) is a view showing the format of research-result information stored in the research-result DB 62.

The research-result DB 62 stores information related to patent applications and presentations at academic meetings for the result obtained by the research and development, in association with the corresponding research theme. The stored information includes, for example, the research theme, patent-application information, information on presentations in a society, and information on book publications and announcements on various media, such as newspapers and TV programs. As the patent-application information, the applicant, the share of the research institute, the inventor, the joint inventor, the share of the joint inventor, the abstract, the main figure, and so on can be stored. As the information on presentations in a society, the paper, the name of the society where a presentation was held, the date, the manuscript, and so on can be stored. In addition to the society, presentations at research meetings and symposiums may be stored.

<Expected-result DB>

Fig. 2(c) is a view showing the format of expected-result information stored in the expected-result DB 63.

The expected-result DB 63 stores the market value and income estimate obtained when a research result is used in business. The stored information includes, for example, the research theme, the research target, the market values (five-level evaluation of the value, market information, and TRRU (trademark) evaluation) of the research target, a business sales estimate (C), the market value (D) of the research result, a success probability (E), an income estimate (F) for an information disclosure charge, an income estimate (G) for an optional charge, a royalty estimate (r), a lump-sum-payment estimate (Ls), a license fee income estimate (H), a risk coefficient (I), a business plan, a business balance estimate (J), a dividend estimate (K), a profit index (R), and a profit-index rank (Br).

Each of these items will be described below.

- The success probability E is an estimated probability at which the research theme is made into business and a profit is obtained. It should be stored in the data base in advance, but may be calculated, as required, from the total research investment A, the market value D of the research result, and the shares of competitors in the market. The shares of competitors may be estimated by referring to the market-trend DB 81 through the communication network.

- The income estimate F for an information disclosure charge is an estimated income obtained by an information disclosure contract in which research-result information is disclosed to a company.

- The income estimate G for an optional charge is an estimated income obtained by an optional contract with a company. The optional contract provides a company before a license agreement, with the research result within a limited period. It provides the company with an experiment and trial period in which the company determines whether the research result can be reduced to practice. When the company determines from an experiment or a trial allowed by the optional contract that the research result can be reduced to practice, the company should make a license agreement.

- The royalty estimate r is an estimated royalty (the rate of charge of reduction to practice) obtained when a license agreement is made with a company.

- The lump-sum-payment estimate Ls is an estimate for the contract money obtained when a license agreement is made with a company.
- The license fee income estimate H is an estimated income obtained when a license agreement is made with a company for a research theme for which a patent is granted (or a research theme for which a patent is not granted).
- The risk coefficient I is the ratio of the income and expense calculated by the following equation from the planned investment and the estimated income of a research theme.

$$I = (A + B)/(F + G + H)$$

where, A indicates the total research investment, B indicates the future research investment, F indicates the income estimate for an information disclosure charge, G indicates the income estimate for an optional charge, and H indicates the license fee income estimate.

- The dividend estimate K is estimated dividends for investment made by investors.
- The profit index R is an index calculated according to the following equation from the market value D of the research result, the success probability E, and the risk coefficient I.

$$R = D \times E/I$$

- The profit-index rank Br is one of a plurality of levels, obtained when the research theme is graded according to the calculated profit index R. For example, the rank is one of numerals 1 to 5. Any appropriate plurality of levels can be used for ranking. The profit-index rank Br may be indicated by an appropriate thing such as a letter or symbol, instead of a numeral.

<Research-money-balance DB>

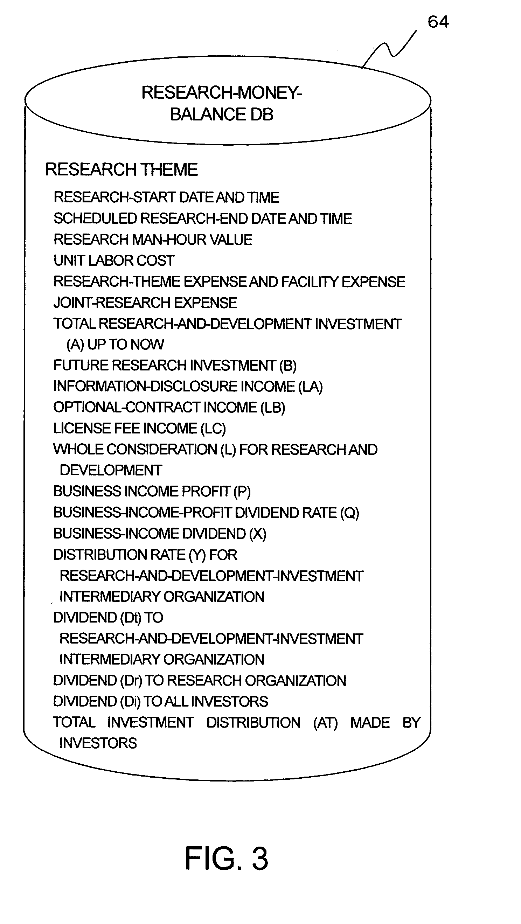

Fig. 3 is a view showing the format of research-money-balance information stored in the research-money-balance data base.

The research-money-balance DB 64 stores information related to research money such as an expense for the research theme and an income obtained by the reduction to practice of the research theme. The stored information includes the research theme, research-start date and time, scheduled research-end date and time, a research man-hour value, a unit labor cost, a research-theme expense and a facility expense, a joint-research expense, the total research-and-development investment (A) up to now, a future research investment (B), an information-disclosure income (LA), an optional-contract income (LB), a license fee income (LC), the whole consideration (L) for research and development, a business income profit (P), a business-income-profit dividend rate (Q), a business-income dividend (X), a distribution rate (Y) for a research-and-development-investment intermediary organization, a dividend (Dt) to the research-and-development-investment intermediary organization, a dividend (Dr) to a research organization, a dividend (Di) to all investors, and the total investment distribution (At) made by the investors.

The research man-hour value means information about the number of persons performing research per fiscal year. From this value, the human-resource size and labor cost for the research can be obtained. The research-theme expense and facility expense are, for example, a research expense and a facility expense in each fiscal year.

The business-income profit P is a profit obtained when business is achieved based on a research result. The business-income-profit dividend rate Q is the rate of dividends to investors who have invested in a research theme, the dividend being given when the business-income profit exists. The business-income dividend X is dividends to investors. The dividends (Di) to all investors are investor dividends given when consideration income exists. The total investment distribution (At) made by investors is the total of investment made by investors in the research theme.

<Contractor-company DB>

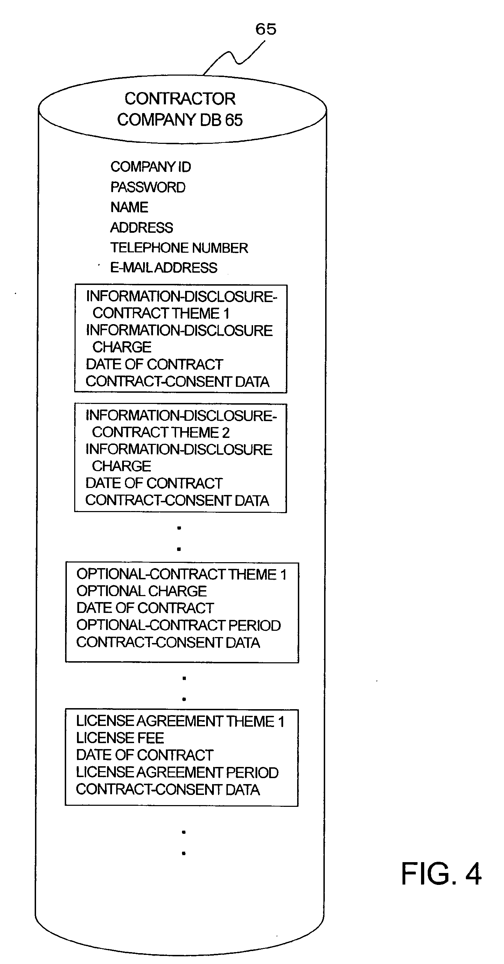

Fig. 4 is a view showing the format of contractor-company information stored in the contractor-company data base.

The contractor-company DB 65 stores information about a company which asks information disclosure, an optional contract, and a license agreement, and contract information. Stored company information includes, for example, a company ID, password, company name, address, telephone number, and e-mail address. The information is stored when the company first makes an application. The contract information includes, for example, information-disclosure-contract information such as an information-disclosure-contract theme, an information-disclosure charge, the date of contract, and contract-consent data; optional-contract information such as an optional-contract theme, an optional charge, the date of contract, an optional-contract period, and contract-consent data; and license agreement information such as a license agreement theme, a license fee, the date of contract, a contract period, and contract-consent data. A plurality of sets of these pieces of contract information can be stored for each company ID. The contract-consent data indicates that the company computer 7 has agreed to presented contract data, and is received from the company computer 7. The contract-consent data may include a special item, an individual item, and a modified item for the content of the contract.

<Technical-seeds DB>

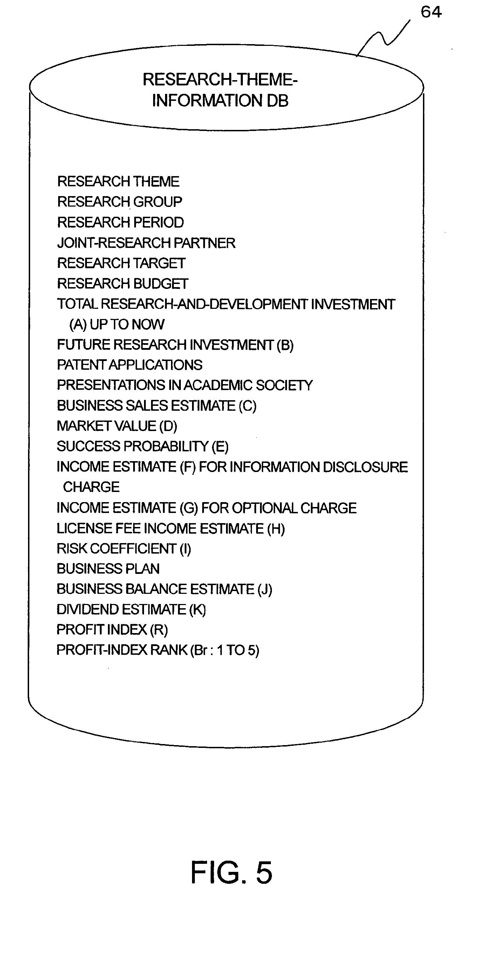

Fig. 5 is a view showing the format of technical-seeds information stored in the technical-seeds data base.

The technical-seeds DB 66 stores research-plan information, research-result information, research-money-balance information, expected-result information and others disclosed to investors, correspondingly to each research theme. The stored information includes the research theme, the research group, the research period, the joint-research partner, the research target, the research budget, the total research-and-development investment (A) up to now, the future research investment (B), the patent applications, presentations in a society, the business sales estimate (C), the market value (D), the success probability (E), the income estimate (F) for an information disclosure charge, the income estimate (G) for an optional charge, the license fee income estimate (H), the risk coefficient (I), the business plan, the business balance estimate (J), the dividend estimate (K), the profit index (R), and the profit-index rank (Br).

<Contract DB>

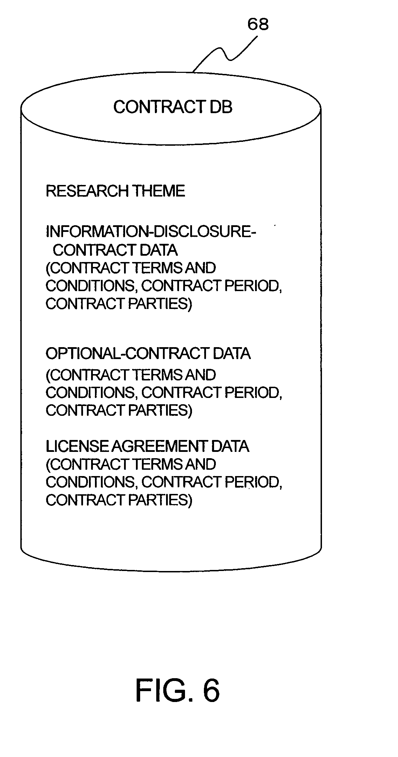

Fig. 6 is a view showing the format of contract information stored in the contract data base.

The contract DB 68 stores information-disclosure-contract data, optional-contract data, license agreement data, and others in association with research themes. Contract data includes contract terms and conditions, a contract period, and contract parties, and shows a contract made between the research-and-development technology transfer system and the company computer 7.

(Flowchart)

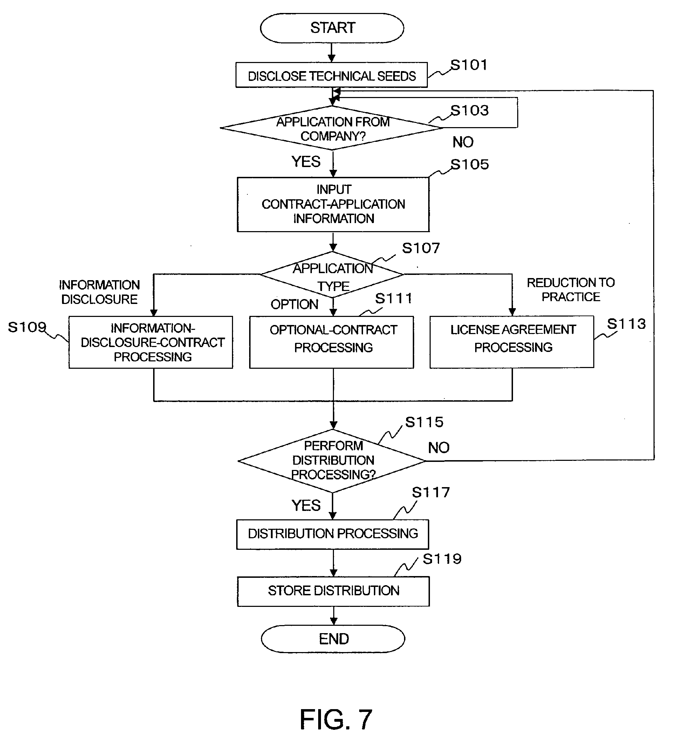

Fig. 7 is a flowchart of research-and-development technology transfer.

The processing section 1 first refers to the technical-seeds information stored in the technical-seeds DB 66, and discloses the information on a network such as the Internet, through the communication-network connection section 5 (in step S101). All items or only items appropriately selected in advance may be disclosed. A network on which the information is disclosed may be any appropriate network in addition to the Internet. The company computer 7 selects a research theme for which an information-disclosure contract, an optional contract, or a license agreement is to be made, from the disclosed technical-seeds information, and makes an application for a contract to the research-and-development technology transfer system through the communication network. When the processing section 1 receives the application from the company computer 7, the processing section goes to the process of step S105. When the processing section 1 does not received any application, the processing section becomes an idle state (in step S103).

The processing section 1 reads contract-application information from the company computer 7, such as the type of application, a research theme, a company name, address, telephone number, and e-mail address (in step S105). In the present embodiment, the type of application indicates the contract for which the company computer 7 has made an application, that is, one of an information-disclosure contract, an optional contract, and a license agreement. When the company computer 7 makes a first application, the processing section 1 may assign a company ID and a password, and store company information, such as the company ID, the password, the company name, address, telephone number, and e-mail address, in the contractor-company DB 65. When the company computer 7 has already have a company ID and a password, the processing section 1 may read the type of application, a research theme, the company ID and the password.

The processing section 1 determines whether the read type of application indicates an information-disclosure contract, an optional contract, and a license agreement (in step S107). When the processing section 1 determines that the type of application indicates an information-disclosure contract, the processing section 1 goes to the process of step S109. When the processing section 1 determines that the type of application indicates an optional contract, the processing section 1 goes to the process of step S111. When the processing section 1 determines that the type of application indicates a license agreement, the processing section 1 goes to the process of step S113.

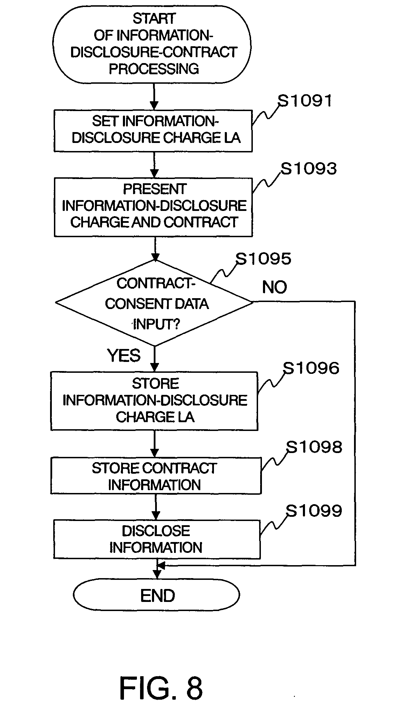

The processing section 1 executes information-disclosure-contract processing (in step S109). Fig. 8 shows a flowchart of the information-disclosure processing. First, the processing section 1 sets an information-disclosure charge LA (in step S1091). For example, the processing section 1 may read the information-disclosure-charge income estimate F of the research theme from the expected-result DB 63 or the technical-seeds DB 66, and set the information-disclosure charge LA equal to the information-disclosure-charge income estimate F. When the information-disclosure-charge income estimate F is not stored in the expected-result DB 63 or the technical-seeds DB 66, the processing section 1 may calculate the information-disclosure charge LA in the following way.

In an example calculation method of the information-disclosure charge LA, the processing section 1 first reads the total research-and-development investment A from the research-money-balance DB 64, and then calculates the information-disclosure charge LA according to the following equation.

$$LA = \alpha \times A$$

where, $\alpha$ indicates an information-disclosure-charge rate set in advance in a predetermined range, for example, of 0.01 to 0.5. An appropriate range may be assigned to $\alpha$.

In another example calculation method of the information-disclosure charge LA, the processing section 1 calculates the information-disclosure charge LA with the use of the market value D of the research result and the success probability E as factors. The processing section 1 first reads the total research-and-development investment A from the research-money-balance DB 64, then reads the market value D of the research result and the success probability E from the expected-result DB 63, and calculates the information-disclosure charge LA according to the following equation.

$$LA = \alpha' \times A \times D \times E$$

where, $\alpha'$ indicates an information-disclosure-charge rate set in advance.

In still another example calculation method of the information-disclosure charge LA, the processing section 1 calculates the information-disclosure charge LA with the use of the profit index R as a factor. The profit index R is calculated from the market value D of the research result, the success probability E, and the risk coefficient I according to the following equation.

$$R = D \times E/I$$

The processing section 1 first reads the total research-and-development investment A from the research-money-balance DB 64, then reads the profit index R from the expected-result DB 63, and calculates the information-disclosure charge LA according to the following equation. When the profit index R is not specified, the processing section calculates the profit index according to the foregoing equation, and then substitute the profit index into the following equation.

$$LA = \alpha'' \times A \times R$$

where, $\alpha''$ indicates an information-disclosure-charge rate set in advance. The parameters $\alpha$, $\alpha'$, and $\alpha''$ can be stored in the expected-result DB 63 or in an appropriate file in the storage section 6.

Next, the processing section 1 reads information-disclosure-contract data which includes contract terms and conditions, from the contract DB 68, and presents it with the information-disclosure charge LA to the company computer 7 (in step S1093). When the company computer 7 agrees to the information-disclosure charge LA and the contract terms and conditions, the company computer 7 sends contract-consent data to the research-and-development technology transfer system.

Next, the processing section 1 reads the contract-consent data output from the company computer 7 (in step S1095), and goes to the process of step S1096. When the company computer 7 does not agree to the contract terms and conditions, and the processing section 1 cannot read contract-consent data (in step S1095), the processing section 1 terminates the information-disclosure-contract processing. When the company computer 7 agrees to the contract terms and conditions, the processing section 1 stores the specified information-disclosure charge LA in the research-money-balance information corresponding to the research theme, in the research-money-balance DB 63 (in step S1096). The processing section 1 further stores contract information, such as the research theme for which the information-disclosure contract has been made, the information-disclosure charge LA, the date of contract indicating the date when the contract-consent data was received, and the contract-consent data, in the contract-company information corresponding to the company ID in the contract-company DB 65 (in step S1098). Next, the processing section 1 discloses the detailed information-disclosure information corresponding to the research theme stored in the research-plan DB 61 to the company computer 7 (in step S1099), and goes to the process of step S115. In addition to disclosing the detailed information-disclosure information, the processing section 1 may provide a material, such as a sample or a strain, corresponding to the research theme.

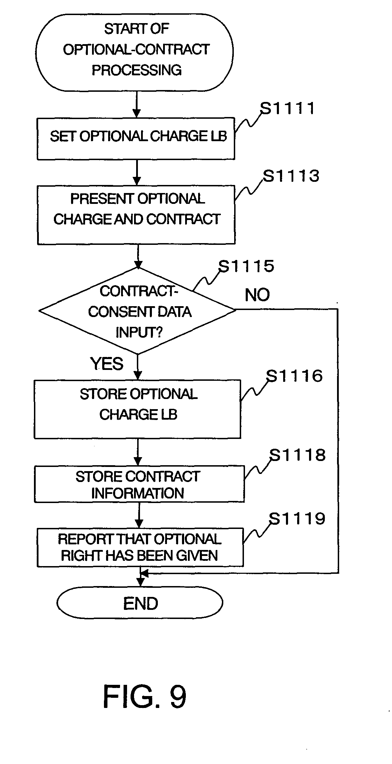

When the processing section 1 determines that the type of application indicates an optional contract (in step S107), the processing section 1 executes optional-contract processing (in step S111) Fig. 9 shows a flowchart of the optional-contract processing. First, the processing section 1 sets an optional charge LB (in step S1111). For example, the processing section 1 may read the optional-charge income estimate G of the research theme from the expected-result DB 63 or the technical-seeds DB 66, and set the optional charge LB equal to the optional-charge income estimate G. When the optional-charge income estimate G is not stored in the expected-result DB 63 or the technical-seeds DB 66, the processing section 1 may calculate the optional charge LB in the following way.

The optional contract gives an experiment and trial period before a license agreement is made. The optional charge LB may be a part of a license fee. The processing section 1 first reads the business sales estimate C, a royalty estimate (r), and a lump-sum-payment estimate (Ls) from the expected-result DB 63 to calculate the license fee income estimate H according to the following equation.

$$H = C \times r + Ls$$

Then, the processing section 1 stores the license fee income estimate H in the expected-result information corresponding to the research theme in the expected-result DB 63. When the license fee income estimate H has already been stored in the expected-result DB 63, the processing section 1 may read the license fee income estimate H from the expected-result DB 63 without performing the above-described process.

In an example calculation method of the optional charge LB, the processing section 1 calculates the optional charge LB from the license fee income estimate H according to the following equation.

$$LB = \beta \times H$$

where, $\beta$ indicates an optional-charge rate set in advance in a predetermined range of 0.1 to 0.5. An appropriate range may be assigned to $\beta$.

In another example calculation method of the optional charge LB, the processing section 1 calculates the optional charge LB with the use of the market value D of the research result and the success probability E as factors. The processing section 1 reads the market value D of the research result and the success probability E from the expected-result DB 63, and calculates the optional charge LB according to the following equation.

$$LA = \beta' \times H \times D \times E$$

where, $\beta'$ indicates an optional-charge rate set in advance.

In still another example calculation method of the optional charge LB, the processing section 1 calculates the optional charge LB with the use of the profit index R as a factor. The profit index R is calculated from the market value D of the research result, the success probability E, and the risk coefficient I according to the following equation.

$$R = D \times E/I$$

The processing section 1 reads the profit index R from the expected-result DB 63, and calculates the optional charge LB according to the following equation.

$$LA = \beta'' \times H \times R$$

where, $\beta''$ indicates an optional-charge rate set in advance. The parameters $\beta$, $\beta'$, and $\beta''$ can be stored in the expected-result DB 63 or in an appropriate file in the storage section 6.

Next, the processing section 1 reads optional-contract data which includes an optional-contract period and contract terms and conditions, from the contract DB 68, and presents it with the optional charge LB to the company computer 7 (in step S1113). When the company computer 7 agrees to the optional charge LB and the contract terms and conditions, the company computer 7 sends contract-consent data to the research-and-development technology transfer system.

The processing section 1 reads the contract-consent data output from the company computer 7 (in step S1115), and goes to the process of step S1116. When the company computer 7 does not agree to the contract terms and conditions, and the processing section 1 cannot read contract-consent data (in step S1115), the processing section 1 terminates the optional-contract processing. When the company computer 7 agrees to the contract terms and conditions, the processing section 1 stores the specified optional charge LB in the research-money-balance information corresponding to the research theme, in the research-money-balance DB 63 (in step S1116). The processing section 1 further stores contract information, such as the research theme for which the optional contract has been made, the optional charge LB, the date of contract indicating the date when the contract-consent data was received, and the optional-contract period and the contract-consent data recorded in the optional-contract data read from the contract DB 68, in the contract-company information corresponding to the company ID in the contract-company DB 65 (in step S1118). Next, the processing section 1 reports to the company computer 7 that an option right for the research theme has been given (in step S1119), and goes to the process of step S115.

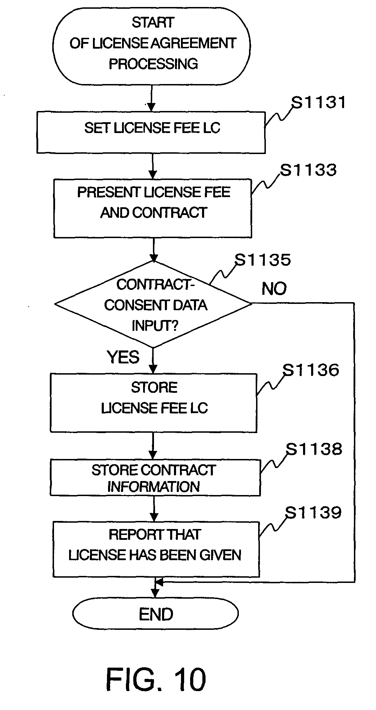

When the processing section 1 determines that the type of application indicates a license agreement (in step S107), the processing section 1 executes license agreement processing (in step S113) Fig. 10 shows a flowchart of the license agreement processing. First, the processing section 1 sets a license fee LC (in step S1131). For example, the processing section 1 may read the license fee income estimate H of the research theme from the expected-result DB 63, and set the license fee LC equal to the license fee income estimate H. When the license fee income estimate H is not stored in the expected-result DB 63, the processing section 1 may calculate the license fee LC in the following way.

The processing section 1 first reads the business sales estimate C, the royalty estimate (r), and the lump-sum-payment estimate (Ls) from the expected-result DB 63 to calculate the license fee LC according to the following equation.

$$LC = C \times r + Ls$$

The license fee LC obtained when a contract is made may be just the lump-sum-payment estimate, and a license fee related to the sales may be calculated after the sales is fixed. The processing section 1 reads license agreement data which includes a reduction-to-practice period and contract terms and conditions, from the contract DB 68, and presents it with the license fee LC to the company computer 7 (in step S1133). When the company computer 7 agrees to the license fee LC and the contract rules,

the company computer 7 sends contract-consent data to the research-and-development technology transfer system.

The processing section 1 reads the contract-consent data output from the company computer 7 (in step S1135), and goes to the process of step S1136. When the company computer 7 does not agree to the contract terms and conditions, and the processing section 1 cannot read contract-consent data (in step S1135), the processing section 1 terminates the license agreement processing. When the company computer 7 agrees to the contract terms and conditions, the processing section 1 stores the specified license fee LC in the research-money-balance information corresponding to the research theme, in the research-money-balance DB 63 (in step S1136). The processing section 1 further stores contract information, such as the research theme for which the license agreement has been made, the license fee LC, the date of contract indicating the date when the contract-consent data was received, and the license agreement period and the contract-consent data recorded in the license agreement data read from the contract DB 68, in the contract-company information corresponding to the company ID in the contract-company DB 65 (in step S1138). Next, the processing section 1 reports to the company computer 7 that a license for the research theme has been given (in step S1139), and goes to the process of step S115.

Next, the processing section 1 determines whether to perform distribution processing (in step S115). The input section may input an instruction for performing distribution processing. Alternatively, the distribution processing may be performed when a timer set in advance indicates time out. When the processing section 1 determines that the distribution processing is not performed, the processing section goes to the process of step S103. When the processing section 1 determines that the distribution processing is performed, the processing section goes to the process of step S117.

When the processing section 1 determines (in step S115) that the distribution processing is performed, the processing section 1 distributes consideration income caused by technology transfer to the research-and-development intermediary organization and research organization (in step S117). The processing section 1 first reads the information-disclosure income LA, the optional-contract income LB, the license fee income LC, and the distribution rate Y for the research-and-development intermediary organization from the research-money-balance DB 63 for each of the research themes selected in advance or automatically selected. Then, the processing section 1 calculates the whole consideration L for research and development according to the following equation.

$$L = LA + LB + LC$$

Further, the processing section 1 calculates dividends to the research-and-development intermediary organization and research organization.

Dividend Dt to the research-and-development intermediary organization $= L \times Y$

Dividend Dr to the research organization $= L \times (1 - Y)$

where, L indicates the whole consideration for research and development calculated in step S309, and Y indicates the distribution rate Y for the research-and-development intermediary organization read from the research-money-balance DB 63. The processing section 1 stores the dividend Dt to the research-and-development intermediary organization and the dividend Dr to the research organization in the research-money-balance information corresponding to the research theme in the research-money-balance DB 64 (in step S119).

The above-described processing is performed when the information disclosure contract, the optional contract, and the license agreement are made with one company computer 7. Each of the contacts may be made with a plurality of company computers 7. In that case, as the estimated numbers of reduction-to-practice organizations which make contracts, the estimated number (n1) of companies to which information is disclosed, the estimated number (n2) of companies with which the optional contract is to be made, and the estimated number (n3) of reduction-to-practice companies are stored in the expected-result DB 63. When the processing section 1 calculates the information-disclosure charge LA, the optional charge LB, and the license fee LC, the processing section 1 may further divide the calculated values by the estimated number (n1) of companies to which information is disclosed, the estimated number (n2) of companies with which the optional contract is to be made, and the estimated number (n3) of reduction-to-practice companies. Further, the processing section 1 stores the total amounts of income from a plurality of reduction-to-practice organizations in the information-disclosure-charge income LA, the optional-contract income LB, and the license fee income LC stored in the research-money-balance DB 64. The risk coefficient I stored in the expected-result DB 63 may be calculated according to the following equation.

$$I = (A + B)/(n1 \times F + n2 \times G + n3 \times H)$$

where A indicates the total research-and-development investment, B indicates the future research investment, F indicates the income estimate for an information disclosure charge, G indicates the income estimate for an optional contract, and H indicates the license fee income estimate.

(Additional note)

A research-and-development technology transfer method or a research-and-development technology transfer system according to the present invention can be provided by a research-and-development technology transfer program having a computer execute each of steps of the method or the system, a computer-readable recording medium having stored thereon the research-and-development technology transfer program, a program product which includes the research-and-development technology transfer program and which can be loaded into an internal memory of a computer, a computer, such as a server, which includes the program, and others.

Industrial Applicability

According to the present invention, a research-and-development technology transfer method, a research-and-development technology transfer system, a research-and-development technology transfer program, and a recording medium having stored thereon the program, all for implementing processes and procedures in a research-and-development intermediary organization which organically connects research-and-development organizations and reduction-to-practice organizations, can be provided. In addition, according to the present invention, technical seeds can be disclosed, which are the results of research, to find matching between the seeds and needs and to perform technology transfer to reduce the results of research into practice. Furthermore, according to the present invention, consideration can be obtained by the technology transfer of the results of research, so that research organizations can collect money equal to research expenses.

## Claims

1. A research-and-development technology transfer method comprising:

   a step in which a processing section reads technical-seeds information corresponding to each research-theme identification information from a storage section having stored for each research-theme identification information, technical-seeds information which includes patent information or academic-society-presentation information, and expense information and income-estimate information both related to the research theme, and discloses the technical-seeds information through a communication network;

   a step in which the processing section receives, from a company computer, contract-application information which includes company identification information, research-theme identification information, and application-type information indicating either an information-disclosure contract or a license agreement;

   a step in which the processing section executes information-disclosure-contract processing, when the processing section determines that the received application-type information indicates an information-disclosure contract, where the processing section sets an information-disclosure charge LA, sends the information-disclosure charge LA and contract data stored in the storage section for each research-theme identification information, to the company computer, stores research-theme identification information and contract information correspondingly to the company identification information of a company which sends contract-terms-and-conditions consent data in the storage section, reads detailed information-disclosure information stored correspondingly to the research-theme identification information from the storage section and discloses the detailed information-disclosure information to the company computer, and/or provides a material such as a sample and a strain;

   a step in which the processing section executes license agreement processing, when the processing section determines that the received application-type information indicates a license agreement, where the processing section sets a license fee LC, sends the license fee LC and contract data stored in the storage section for each research-theme identification information, to the company computer, stores research-theme identification information and contract information correspondingly to the company identification information of a company which sends contract-terms-and-conditions consent data in the storage section, and reports to the company computer that a license has been given;

   a step in which the processing section performs distribution processing where the processing section obtains a dividend Dt to a research-and-development intermediary organization and a dividend Dr to a research organization on the basis of consideration income obtained by technology transfer, which includes the information-disclosure charge LA and/or the license fee LC, for the research-theme identification information; and

a step in which the processing section stores the dividend Dt to the research-and-development intermediary organization and the dividend Dr to the research organization in the storage section correspondingly to the research-theme identification information.

2. A research-and-development technology transfer method according to Claim 1,

wherein the application type further includes an optional contract, and

the method further comprising a step in which the processing section executes optional-contract processing, when the processing section determines that the received application-type information indicates an optional contract, where the processing section sets an optional charge LB, sends the optional charge LB and contract data stored in the storage section for each research-theme identification information, to the company computer, stores research-theme identification information and contract information correspondingly to the company identification information of a company which sends contract-terms-and-conditions consent data in the storage section, and reports to the company computer that an option right has been given.

3. A research-and-development technology transfer method according to Claim 1 or 2, wherein the technical-seeds information further comprises a profit index R, a profit-index rank, or a risk coefficient I.

4. A research-and-development technology transfer method according to one of Claims 1 to 3, wherein the step in which the processing section executes the information-disclosure-contract processing comprises:

a step in which the processing section sets the information-disclosure charge LA by reading an information-disclosure-charge income estimate F corresponding to the research-theme identification information from the storage section and using the information-disclosure-charge income estimate F, or by reading the total research-and-development investment A from the storage section and using a predetermined equation;

a step in which the processing section reads contract data which includes contract terms and conditions corresponding to the research-theme identification information from the storage section, and presents the contract data together with the information-disclosure charge LA to the company computer through a communication network;

a step in which the processing section receives contract-consent data from the company computer;

a step in which the processing section stores the research-theme identification information, the information-disclosure charge LA, a contract period, and the contract-consent data in the storage section corresponding to the company identification information; and

a step in which the processing section reads the detailed information-disclosure information stored in the storage section correspondingly to the research-theme identification information, discloses the detailed information-disclosure information to the company computer, and/or provides a material, such as a sample or a strain.

5. A research-and-development technology transfer method according to Claim 4, wherein the step in which the processing section sets the information-disclosure charge LA is one of

a step in which the processing section calculates the information-disclosure charge LA according to an information-disclosure-charge rate $\alpha$ set in advance and the total research-and-development investment A corresponding to the research-theme identification information, read from the storage section, by using the following equation

$$LA = \alpha \times A;$$

a step in which the processing section calculates the information-disclosure charge LA according to an information-disclosure-charge rate $\alpha'$ set in advance, the total research-and-development investment A corresponding to the research-theme identification information, read from the storage section, the market value D of the research result, and a success probability E by using the following equation

$$LA = \alpha' \times A \times D \times E;$$

and

a step in which the processing section calculates the information-disclosure charge LA by using the following equation according to an information-disclosure-charge rate $\alpha''$ set in advance, the total research-and-development investment A corresponding to the research-theme identification information, read from the storage section, and a profit index R read from the storage section or calculated according the market value D of the research result, the success probability E, and a risk coefficient I by using the following equation

$$R = D \times E/I$$

$$LA = \alpha'' \times A \times R.$$

6. A research-and-development technology transfer method according to one of Claims 1 to 3, wherein the step in which the processing section executes the license agreement processing comprises:

a step in which the processing section sets the license fee LC by reading a license fee income estimate H corresponding to the research-theme identification information from the storage section and using the license fee income estimate H, or by reading the royalty data from the storage section and using a predetermined equation;

a step in which the processing section reads contract data which includes contract terms and conditions corresponding to the research-theme identification information from the storage section, and presents the contract data together with the license fee LC to the company computer;

a step in which the processing section receives contract-consent data from the company computer;

a step in which the processing section stores the research-theme identification information, the license fee LC, a contract period, and the contract-consent data in the storage section corresponding to the company identification information; and

a step in which the processing section reports to the company computer that a license for the research-theme identification information has been given.

7. A research-and-development technology transfer method according to Claim 6, wherein, in the step in which the processing section sets the license fee LC,

the processing section calculates the license fee LC according to a business sales estimate C, a royalty estimate r, and a lump-sum-payment estimate Ls read from the storage section by using an equation of LC = C x r + Ls.

8. A research-and-development technology transfer method according to Claims 2 or 3, wherein the step in which the processing section executes the optional-contract processing comprises:

a step in which the processing section sets the option charge LB by reading an optional-charge income estimate G corresponding to the research-theme identification information from the storage section and using the optional-charge income estimate G, or by using a predetermined equation with the use of the license fee income estimate H;

a step in which the processing section reads contract data which includes an optional-contract period and contract terms and conditions corresponding to the research-theme identification information from the storage section, and presents the contract data together with the option charge LB to the company computer;

a step in which the processing section receives contract-consent data from the company computer;

a step in which the processing section stores the research-theme identification information, the option charge LB, a contract period, an optional-contract period, and the contract-consent data in the storage section corresponding to the company identification information; and

a step in which the processing section reports to the company computer that an option right for the research-theme identification information has been given.

9. A research-and-development technology transfer method according to Claim 8, wherein the step in which the processing section sets the option charge LB is one of

a step in which the processing section calculates the option charge LB according to an optional-charge rate $\beta$ set in advance and the license fee income estimate H by using the following equation

$$LB = \beta \times H;$$

a step in which the processing section calculates the option charge LB according to an optional-charge rate $\beta'$ set in advance, the license fee income estimate H, and the market value D of the research result and a success probability E both read from the storage section by using the following equation

$$LB = \beta' \times H \times D \times E;$$

and

a step in which the processing section calculates the option charge LB by using the following equation according to an optional-charge rate $\beta''$ set in advance, the license fee income estimate H, and a profit index R read from the storage section or a profit index R calculated according the market value D of the research result, the success probability E, and a risk coefficient I by using the following equa-

tion

$$R = D \times E/I$$

$$LB = \beta'' \times H \times R.$$

**10.** A research-and-development technology transfer method according to Claim 8 or 9, wherein the processing section reads the license fee income estimate H from the storage section, or calculates the license fee income estimate H according to a business sales estimate C, a royalty estimate r, and a lump-sum-payment estimate Ls read from the storage section by using an equation of $H = C \times r + Ls$.

**11.** A research-and-development technology transfer method according to one of Claims 1 to 10, wherein the step in which the processing section performs the distribution processing comprises:

a step in which the processing section reads the information-disclosure income LA, the optional-contract charge LB, the license fee LC, and a distribution rate Y for the research-and-development intermediary organization, corresponding to detailed research-theme information from the storage section;
a step in which the processing section obtains the whole consideration L for research and development according to the information-disclosure income LA, the optional-contract charge LB, the license fee LC which are read, by the use of the following equation,

$$L = LA + LB + LC;$$

and
a step in which the processing section calculates a dividend Dt to the research-and-development intermediary organization and a dividend Dr to the research organization according to the obtained whole consideration L for research and development and the distribution rate Y for the research-and-development intermediary organization, read from the storage section, by the use of the following equation,

$$Dt = L \times Y$$

$$Dr = L \times (1 - Y).$$

**12.** A research-and-development technology transfer method according to one of Claims 1 to 11, further comprising:

a step in which the processing section receives company-related information required for registration, from the company computer;
a step in which the processing section assigns a password corresponding to company identification information after the processing section receives the company-related information, and sends these pieces of data to the company computer; and
a step in which the processing section stores the password and the company-related information in the storage section correspondingly to the company identification information.

**13.** A research-and-development technology transfer program which makes a computer execute each of steps wherein:

a step in which a processing section reads technical-seeds information corresponding to each research-theme identification information from a storage section having stored for each research-theme identification information, technical-seeds information which includes patent information or academic-society-presentation information, and expense information and income-estimate information both related to the research theme, and discloses the technical-seeds information through a communication network;
a step in which the processing section receives, from a company computer, contract-application information which includes company identification information, research-theme identification information, and application-type information indicating either an information-disclosure contract or a license agreement;
a step in which the processing section executes information-disclosure-contract processing, when the processing section determines that the received application-type information indicates an information-disclosure contract, where the processing section sets an information-disclosure charge LA, sends the information-disclosure charge LA and contract data stored in the storage section for each research-theme identification information, to the company computer, stores research-theme identification information and contract information correspondingly to the company identification information of a company which sends contract-terms-and-conditions consent data in the storage section, reads detailed information-disclosure information stored correspondingly to the research-theme identification information from the storage section and discloses the detailed information-disclosure information to the company computer, and/or provides a material such as a sample and a strain;

a step in which the processing section executes license agreement processing, when the processing section determines that the received application-type information indicates a license agreement, where the processing section sets a license fee LC, sends the license fee LC and contract data stored in the storage section for each research-theme identification information, to the company computer, stores research-theme identification information and contract information correspondingly to the company identification information of a company which sends contract-terms-and-conditions consent data in the storage section, and reports to the company computer that a license has been given;

a step in which the processing section performs distribution processing where the processing section obtains a dividend Dt to a research-and-development intermediary organization and a dividend Dr to a research organization on the basis of consideration income obtained by technology transfer, which includes the information-disclosure charge LA and/or the license fee LC, for the research-theme identification information; and

a step in which the processing section stores the dividend Dt to the research-and-development intermediary organization and the dividend Dr to the research organization in the storage section correspondingly to the research-theme identification information.

14. A computer-readable recording medium having a research-and-development technology transfer program stored thereon, where the program makes computer excute steps wherein:

a step in which a processing section reads technical-seeds information corresponding to each research-theme identification information from a storage section having stored for each research-theme identification information, technical-seeds information which includes patent information or academic-society-presentation information, and expense information and income-estimate information both related to the research theme, and discloses the technical-seeds information through a communication network;

a step in which the processing section receives, from a company computer, contract-application information which includes company identification information, research-theme identification information, and application-type information indicating either an information-disclosure contract or a license agreement;

a step in which the processing section executes information-disclosure-contract processing, when the processing section determines that the received application-type information indicates an information-disclosure contract, where the processing section sets an information-disclosure charge LA, sends the information-disclosure charge LA and contract data stored in the storage section for each research-theme identification information, to the company computer, stores research-theme identification information and contract information correspondingly to the company identification information of a company which sends contract-terms-and-conditions consent data in the storage section, reads detailed information-disclosure information stored correspondingly to the research-theme identification information from the storage section and discloses the detailed information-disclosure information to the company computer, and/or provides a material such as a sample and a strain;

a step in which the processing section executes license agreement processing, when the processing section determines that the received application-type information indicates a license agreement, where the processing section sets a license fee LC, sends the license fee LC and contract data stored in the storage section for each research-theme identification information, to the company computer, stores research-theme identification information and contract information correspondingly to the company identification information of a company which sends contract-terms-and-conditions consent data in the storage section, and reports to the company computer that a license has been given;

a step in which the processing section performs distribution processing where the processing section obtains a dividend Dt to a research-and-development intermediary organization and a dividend Dr to a research organization on the basis of consideration income obtained by technology transfer, which includes the information-disclosure charge LA and/or the license fee LC, for the research-theme identification information; and

a step in which the processing section stores the dividend Dt to the research-and-development intermediary organization and the dividend Dr to the research organization in the storage section correspondingly to the research-theme identification information.

FIG. 1

(a) 61

RESEARCH-PLAN
DB

RESEARCH THEME
RESEARCH UNIT
RESEARCH GROUP
NAMES OF RESEARCHERS
RESEARCH PERIOD
WHETHER JOINT RESEARCH
 IS PERFORMED
JOINT RESEARCH PARTNER
RESEARCH TARGET
RESEARCH BUDGET

(b) 62

RESEARCH-
RESULT DB

RESEARCH THEME
PATENT APPLICATIONS
PRESENTATIONS IN
 ACADEMIC SOCIETY
BOOK PUBLICATIONS
ANNOUNCEMENTS ON
 NEWSPAPERS AND TV
 PROGRAMS

(c) 63

EXPECTED-RESULT DB

RESEARCH THEME
RESEARCH TARGET
MARKET VALUE OF RESEARCH
 TARGET
BUSINESS SALES ESTIMATE (C)
MARKET VALUE (D) OF RESEARCH
 RESULT
SUCCESS PROBABILITY (E)
INCOME ESTIMATE (F) FOR
 INFORMATION DISCLOSURE CHARGE
INCOME ESTIMATE (G) FOR OPTIONAL
 CHARGE
ROYALTY ESTIMATE (R)
LUMP-SUM-PAYMENT ESTIMATE (Ls)
LICENSE FEE INCOME ESTIMATE (H)
RISK COEFFICIENT (I)
BUSINESS PLAN
BUSINESS BALANCE ESTIMATE (J)
DIVIDEND ESTIMATE (K)
PROFIT INDEX (R)
PROFIT-INDEX RANK (Br : 1 TO 5)

FIG. 2

64

RESEARCH-MONEY-
BALANCE DB

RESEARCH THEME

RESEARCH-START DATE AND TIME

SCHEDULED RESEARCH-END DATE AND TIME

RESEARCH MAN-HOUR VALUE

UNIT LABOR COST

RESEARCH-THEME EXPENSE AND FACILITY EXPENSE

JOINT-RESEARCH EXPENSE

TOTAL RESEARCH-AND-DEVELOPMENT INVESTMENT
  (A) UP TO NOW

FUTURE RESEARCH INVESTMENT (B)

INFORMATION-DISCLOSURE INCOME (LA)

OPTIONAL-CONTRACT INCOME (LB)

LICENSE FEE INCOME (LC)

WHOLE CONSIDERATION (L) FOR RESEARCH AND
  DEVELOPMENT

BUSINESS INCOME PROFIT (P)

BUSINESS-INCOME-PROFIT DIVIDEND RATE (Q)

BUSINESS-INCOME DIVIDEND (X)

DISTRIBUTION RATE (Y) FOR
  RESEARCH-AND-DEVELOPMENT-INVESTMENT
  INTERMEDIARY ORGANIZATION

DIVIDEND (Dt) TO
  RESEARCH-AND-DEVELOPMENT-INVESTMENT
  INTERMEDIARY ORGANIZATION

DIVIDEND (Dr) TO RESEARCH ORGANIZATION

DIVIDEND (Di) TO ALL INVESTORS

TOTAL INVESTMENT DISTRIBUTION (AT) MADE BY
  INVESTORS

# FIG. 3

**EP 1 536 354 A1**

65

CONTRACTOR
COMPANY DB 65

COMPANY ID
PASSWORD
NAME
ADDRESS
TELEPHONE NUMBER
E-MAIL ADDRESS

INFORMATION-DISCLOSURE-
 CONTRACT THEME 1
INFORMATION-DISCLOSURE
 CHARGE
DATE OF CONTRACT
CONTRACT-CONSENT DATA

INFORMATION-DISCLOSURE-
 CONTRACT THEME 2
INFORMATION-DISCLOSURE
 CHARGE
DATE OF CONTRACT
CONTRACT-CONSENT DATA

OPTIONAL-CONTRACT THEME 1
OPTIONAL CHARGE
DATE OF CONTRACT
OPTIONAL-CONTRACT PERIOD
CONTRACT-CONSENT DATA

LICENSE AGREEMENT THEME 1
LICENSE FEE
DATE OF CONTRACT
LICENSE AGREEMENT PERIOD
CONTRACT-CONSENT DATA

FIG. 4

18

64

RESEARCH-THEME-
INFORMATION DB

RESEARCH THEME
RESEARCH GROUP
RESEARCH PERIOD
JOINT-RESEARCH PARTNER
RESEARCH TARGET
RESEARCH BUDGET
TOTAL RESEARCH-AND-DEVELOPMENT INVESTMENT
  (A) UP TO NOW
FUTURE RESEARCH INVESTMENT (B)
PATENT APPLICATIONS
PRESENTATIONS IN ACADEMIC SOCIETY
BUSINESS SALES ESTIMATE (C)
MARKET VALUE (D)
SUCCESS PROBABILITY (E)
INCOME ESTIMATE (F) FOR INFORMATION DISCLOSURE
  CHARGE
INCOME ESTIMATE (G) FOR OPTIONAL CHARGE
LICENSE FEE INCOME ESTIMATE (H)
RISK COEFFICIENT (I)
BUSINESS PLAN
BUSINESS BALANCE ESTIMATE (J)
DIVIDEND ESTIMATE (K)
PROFIT INDEX (R)
PROFIT-INDEX RANK (Br : 1 TO 5)

# FIG. 5

68

CONTRACT DB

RESEARCH THEME

INFORMATION-DISCLOSURE-
 CONTRACT DATA
(CONTRACT TERMS AND
CONDITIONS, CONTRACT PERIOD,
CONTRACT PARTIES)

OPTIONAL-CONTRACT DATA
(CONTRACT TERMS AND
CONDITIONS, CONTRACT PERIOD,
CONTRACT PARTIES)

LICENSE AGREEMENT DATA
(CONTRACT TERMS AND
CONDITIONS, CONTRACT PERIOD,
CONTRACT PARTIES)

FIG. 6

START

DISCLOSE TECHNICAL SEEDS — S101

APPLICATION FROM COMPANY? — S103   NO

YES

INPUT CONTRACT-APPLICATION INFORMATION — S105

APPLICATION TYPE — S107

INFORMATION DISCLOSURE

OPTION   S111

REDUCTION TO PRACTICE

S109 — INFORMATION-DISCLOSURE-CONTRACT PROCESSING

OPTIONAL-CONTRACT PROCESSING

LICENSE AGREEMENT PROCESSING — S113

PERFORM DISTRIBUTION PROCESSING? — S115   NO

YES

DISTRIBUTION PROCESSING — S117

STORE DISTRIBUTION — S119

END

FIG. 7

FIG. 8

START OF
OPTIONAL-CONTRACT
PROCESSING

SET OPTIONAL CHARGE LB —S1111

PRESENT OPTIONAL
CHARGE AND CONTRACT —S1113

CONTRACT-
CONSENT DATA
INPUT? —S1115

NO

YES

STORE OPTIONAL
CHARGE LB —S1116

STORE CONTRACT
INFORMATION —S1118

REPORT THAT OPTIONAL
RIGHT HAS BEEN GIVEN —S1119

END

FIG. 9

START
OF LICENSE AGREEMENT
PROCESSING

SET LICENSE FEE LC — S1131

PRESENT LICENSE FEE
AND CONTRACT — S1133

CONTRACT-
CONSENT DATA
INPUT? — S1135

NO

YES

STORE
LICENSE FEE LC — S1136

STORE CONTRACT
INFORMATION — S1138

REPORT THAT
LICENSE HAS BEEN GIVEN — S1139

END

FIG. 10

## INTERNATIONAL SEARCH REPORT

| | International application No. |
|---|---|
| | PCT/JP03/08114 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched
Jitsuyo Shinan Koho          1922–1996   Toroku Jitsuyo Shinan Koho   1994–2003
Kokai Jitsuyo Shinan Koho   1971–2003   Jitsuyo Shinan Toroku Koho   1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 01/93132 A1 (TAMAOKA Corp.),<br>06 December, 2001 (06.12.01),<br>Full text; all drawings<br>& JP 2001-344533 A | 1-14 |
| Y | JP 2002-24715 A (Taiheiyo Cement Corp.),<br>25 January, 2002 (25.01.02),<br>Full text; all drawings<br>(Family: none) | 1-14 |
| Y | JP 2002-99649 A (Kaneaki SAKAMOTO),<br>05 April, 2002 (05.04.02),<br>Full text; all drawings<br>(Family: none) | 1-14 |

| ☒ Further documents are listed in the continuation of Box C. | ☐ See patent family annex. |
|---|---|

\*     Special categories of cited documents:
"A"   document defining the general state of the art which is not considered to be of particular relevance
"E"   earlier document but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 22 July, 2003 (22.07.03) | 05 August, 2003 (05.08.03) |

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

International application No.

PCT/JP03/08114

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | WO 00/55791 A2  (THE PATENT AND LICENSE EXCHANGE, INC.), 21 September, 2000 (21.09.00), Full text; all drawings & JP 2000-268111 A | 1-14 |

Form PCT/ISA/210 (continuation of second sheet) (July 1998)

26